# EUROPEAN PATENT APPLICATION

(11) **EP 4 759 676 A1**
(43) Date of publication of application: **17.06.2026**
(21) Application number: 24851322.8
(22) Date of filing: 12.04.2024
(51) Int. Cl.: B62D 5/04, B62D 1/16

(54) **VEHICLE STEERING DEVICE**

(30) Priority: 07.08.2023 JP 2023128349
(71) Applicant: NSK Steering & Control, Inc., Tokyo, 141-0032 (JP)
(72) Inventor: NISHIDA, Kazuki, Maebashi-shi, Gunma 371-8527 (JP)
(74) Representative: SSM Sandmair
(86) International application number: PCT/JP2024/014835
(87) International publication number: WO 2025/032888

(57) **Abstract**

A vehicle steering device includes: a rotating member including an external thread portion and a first cylindrical surface portion; a nut that moves in a non-rotating state in an X direction with respect to the rotating member; a first annular member that is inserted into the first cylindrical surface portion and is movable in the X direction; a wave washer that abuts on the first annular member and is elastically deformable in the X direction; and a housing. The housing includes: a holding portion that holds the elastic member; and a nut abutment portion that is capable of abutting on the nut when the nut moves and transmits, to the rotating member, a reaction force directed toward the X1 side generated at a time of abutment of the nut.

## Description

### Field

What is disclosed herein relates to a vehicle steering device.

### Background

A steer-by-wire vehicle steering device has a configuration in which a steering wheel and a turning wheel are mechanically disconnected. In this configuration, the steering reaction force is not transmitted from a turning mechanism including the turning wheel to the steering wheel. Therefore, a steering reaction force device and a stopper mechanism unit are provided on a steering shaft connected to the steering wheel.

The steering reaction force device applies, to the steering wheel, a reaction force in a direction opposite to a rotation direction (steering direction) of the steering wheel to give a natural steering feel to the driver. The steering reaction force device includes, for example, a motor and a deceleration mechanism, and the steering reaction force generated by the motor is transmitted to the steering shaft via a deceleration mechanism. The deceleration mechanism includes a worm shaft and a worm wheel, for example. When a shaft tooth of the worm shaft meshes with a wheel tooth of the worm wheel, rotation of the motor is transmitted to the worm wheel via the worm shaft.

The steering wheel is connected to a steering shaft. The stopper mechanism unit transmits a limit range of a turning angle of a turning wheel to a driver. The stopper mechanism unit includes: a rotating member connected to the steering shaft; a nut that is attached to the rotating member and makes a linear motion in the axial direction with respect to the rotating member; and a stopper that blocks linear motion of the nut, for example. When the nut in linear motion abuts on the stopper, the rotation of the rotating member is stopped, and accordingly, the rotation (steering) of the steering wheel is also blocked via the steering shaft. In this manner, the rotation angle of the steering wheel is limited.

Here, immediately after the nut in linear motion abuts on the stopper, the motor of the steering reaction force device does not stop immediately but continues to rotate for a while due to inertia. Therefore, a force is applied to a meshing portion between the worm shaft and the worm wheel in the deceleration mechanism, leading to a possible damage onto the meshing portion. In Patent Literature 1, in order to reduce the damage, the stopper with which the nut abuts is formed of an elastic member.

### Citation List

### Patent Literature

Patent Literature 1: DE-A 102020126785

### Summary

### Technical Problem

However, in Patent Literature 1, the elastic members are disposed on both sides, namely, one side and the other side, in the axial direction of the rotating member, elongating the stopper mechanism unit in the axial direction, having a possibility of eventually enlarging the vehicle steering device.

The present disclosure has been made in view of the above-described problems, and aims to provide a vehicle steering device that has achieved further downsizing.

### Solution to Problem

In order to achieve the above object, a vehicle steering device according to an aspect is a vehicle steering device in which a turning wheel and a steering wheel are mechanically disconnected. The vehicle steering device includes a stopper mechanism unit that regulates a range of a rotation angle of the steering wheel when the steering wheel is rotated. The stopper mechanism unit includes: a rotating member that includes an external thread portion and a first cylindrical surface portion, the external thread portion being provided with an external thread on an outer circumference, the first cylindrical surface portion being adjacent to the external thread portion on one side of the external thread portion in an axial direction of a central axis, extending in a circumferential direction around the central axis, and having a cylindrical surface with a diameter smaller than an outer diameter of the external thread portion, the rotating member being configured to rotate in the circumferential direction as the steering wheel rotates; a nut that is disposed on an outer circumferential side of the rotating member, has an inner circumference provided with an internal thread configured to mesh with the external thread, and is configured to move in a non-rotating state in an axial direction with respect to the rotating member by rotation of the rotating member; a first annular member that is configured to be inserted into the first cylindrical surface portion of the rotating member and is configured to abut on the nut or the external thread portion so as to be movable in the axial direction; an elastic member that is disposed adjacent to the first annular member on one side of the first annular member in the axial direction and is configured to abut on the first annular member so as to be elastically deformable in the axial direction; and a housing that is disposed on an outer circumferential side of the rotating member, the nut, the first annular member, and the elastic member. The housing includes: a holding portion that holds the elastic member; and a nut abutment portion that is disposed on the other side of the nut in the axial direction to face the nut, is capable of abutting on the nut when the nut moves, and is configured to transmit, to the rotating member, a reaction force directed toward one side in the axial direction generated at a time of abutment of the nut.

In a steer-by-wire steering device, a steering reaction force device is provided on a steering shaft connected to the steering wheel in order to apply, to the steering wheel, a steering reaction force in a direction opposite to the steering direction of the steering wheel. In addition, there is provided a stopper mechanism unit for transmitting a limit range of the turning angle of the turning wheel to the driver. The stopper mechanism unit is provided to block rotation of the steering wheel by a certain angle or more, for example, in order to allow the driver to recognize an end contact position and prevent disconnection, due to excessive rotation, of the airbag harness connected to the steering wheel. The stopper mechanism unit, for example, includes: a rotating member connected to the steering shaft; a nut attached to the rotating member and linearly moving in the axial direction with respect to the rotating member; and a stopper that blocks linear motion of the nut. When the nut in linear motion abuts on the stopper, the rotation of the rotating member is stopped, and accordingly, the rotation (steering) of the steering wheel is also blocked via the steering shaft.

Immediately after the linearly moving nut abuts on the stopper, the motor of the steering reaction force device tends to continue to rotate for a while due to inertia. This leads to a possibility that a force is applied to the meshing portion between the worm shaft and the worm wheel in the deceleration mechanism to cause damage in the meshing portion. Therefore, as described above, in Patent Literature 1, in order to reduce the damage of the meshed portion, the stopper on which the nut abuts is formed of an elastic member. Specifically, the elastic members are disposed on both sides, namely, one side and the other side, in the axial direction of the rotating member, elongating the stopper mechanism unit in the axial direction, having a possible enlargement of the vehicle steering device.

Here, the present disclosure sets only one elastic member. That is, the elastic member is provided on one side in the axial direction with respect to the nut, while the elastic member is not provided on the other side in the axial direction with respect to the nut, reducing the number of the elastic members to be smaller than the number in Patent Literature 1. Therefore, the distance of the stopper mechanism unit in the axial direction is further shortened, making it eventually possible to provide a vehicle steering device that has achieved further downsizing. Hereinafter, brief description will be given on how the stopper mechanism unit functions effectively even when one elastic member is used.

First, as a first aspect, when the nut makes a linear motion to one side in the axial direction, the nut compresses the elastic member in the axial direction via the first annular member to elastically deform the elastic member.

Next, as a second aspect, when the nut makes a linear motion to the other side in the axial direction, the nut abuts on the nut abutment portion, generating a reaction force directed from the nut abutment portion toward the one side in the axial direction. The reaction force is transmitted to the external thread, allowing the rotating member to move toward one side in the axial direction. Thereafter, the first annular member compresses the elastic member in the axial direction to elastically deform the elastic member.

In this manner, in both the first aspect in which the nut makes a linear motion to one side in the axial direction and the second aspect in which the nut makes a linear motion to the other side in the axial direction, elastic deformation of one elastic member absorbs an impact occurring at the time of hitting between the first annular member or the nut abutment portion and the nut. As described above, in the present disclosure, since the number of elastic members is smaller than the number in Patent Literature 1, the distance of the stopper mechanism unit in the axial direction is further shortened, making it eventually possible to achieve downsizing of the vehicle steering device.

As a desired aspect, the rotating member includes a second cylindrical surface portion that is adjacent to the external thread portion on the other side of the external thread portion in the axial direction, extends in the circumferential direction, and has a cylindrical surface having a diameter smaller than an outer diameter of the external thread portion. The nut abutment portion is a second annular member configured to be inserted into the second cylindrical surface portion.

In the second aspect described above, when the nut makes a linear motion to the other side in the axial direction, the nut abuts on the second annular member, generating a reaction force from the second annular member toward the one side in the axial direction. The reaction force is transmitted to the external thread, allowing a rotating member 31 to move toward one side in the axial direction. In this manner, the second annular member appropriately functions as a nut abutment portion. Incidentally, when the second annular member is damaged, the function as the nut abutment portion can be easily recovered by replacing the second annular member with a new member.

As a desired aspect, the elastic member has an annular shape extending in the circumferential direction, the rotating member has a tubular shape extending in a circumferential direction, the holding portion of the housing is provided with a through hole with an annular shape penetrating in the axial direction and extending in the circumferential direction, an inner diameter of the elastic member is equal to or larger than an inner diameter of the rotating member, and an inner diameter of the through hole of the holding portion is equal to or larger than the inner diameter of the elastic member.

Accordingly, a component such as a shaft extending in the axial direction can be fitted to the inner circumferential side of the rotating member by penetrating the through hole and the inner circumferential side of the elastic member.

As a desired aspect, the first annular member and the first cylindrical surface portion are movable relative to each other in the axial direction, and the second annular member and the second cylindrical surface portion are movable relative to each other in the axial direction.

In the first aspect described above, the nut makes a linear motion to one side in the axial direction, pushes the first annular member to be moved to one side in the axial direction to compress the elastic member. In the second aspect described above, the nut makes a linear motion to the other side in the axial direction, and the nut pushes the second annular member to be moved to the other side in the axial direction. Accordingly, the first annular member and the second annular member move smoothly, making it possible to easily compress the elastic member.

As a desired aspect, the external thread of the rotating member and the second annular member are capable of abutting on each other. In the second aspect described above, since the reaction force is transmitted to the external thread and the rotating member moves toward one side in the axial direction, the elastic deformation of the elastic member becomes smoother by allowing the external thread and the second annular member to abut on each other.

As a desired aspect, the holding portion of the housing has a flat surface extending in a radial direction, and a gap in an axial direction is provided between the flat surface and the first annular member. Accordingly, by providing the gap in the axial direction between the flat surface and the first annular member, the movement of the first annular member becomes smooth, making it possible to easily compress the elastic member.

As a desired aspect, the elastic member has an annular shape extending in the circumferential direction, a disc portion extending in the radial direction is provided at an end portion on one side in the axial direction of the holding portion of the housing, and the elastic member abuts on the disc portion to allow the holding portion to hold the elastic member. With this configuration, the elastic member can be held more stably, so that the compression of the elastic member becomes smoother.

As a desired aspect, at least one of the first annular member or the second annular member has a protrusion that protrudes toward the nut in the axial direction and is capable of abutting on the nut.

With this configuration, a movable distance in the axial direction of the nut becomes small in contrast to the first annular member and the second annular member having no protrusion. Therefore, the limit range of the turning angle of the turning wheel can be reduced to set the rotatable angle of the steering wheel to be smaller.

As a desired aspect, the first annular member includes a main body and a covering layer provided on a surface layer portion of the main body, and an elastic modulus of the covering layer is smaller than an elastic modulus of the main body.

This makes it possible to reduce a contact sound (interference sound) when the nut hits the first annular member.

### Advantageous Effects of Invention

According to the present disclosure, it is possible to provide a vehicle steering device that has achieved further downsizing.

### Brief Description of Drawings

FIG. 1 is a schematic diagram illustrating an overall configuration of a vehicle steering device according to a first embodiment.
FIG. 2 is a cross-sectional view illustrating a part of FIG. 1.
FIG. 3 is a cross-sectional view illustrating a part of FIG. 2.
FIG. 4 is an enlarged cross-sectional view of a part of FIG. 3.
FIG. 5 is an enlarged cross-sectional view of a part of FIG. 4.
FIG. 6 is an exploded perspective view of the stopper mechanism unit according to the first embodiment.
FIG. 7 is a perspective view of the wave washer of FIG. 6.
FIG. 8 is a cross-sectional view of the stopper mechanism unit in a state where the nut is located at an end on one side in the axial direction.
FIG. 9 is a cross-sectional view of the stopper mechanism unit in a state where the nut is located at the end on the other side in the axial direction.
FIG. 10 is a cross-sectional view of a stopper mechanism unit according to a first modification.
FIG. 11 is a cross-sectional view of a stopper mechanism unit according to a second modification.
FIG. 12 is a cross-sectional view of a stopper mechanism unit according to a second embodiment.
FIG. 13 is a cross-sectional view of a stopper mechanism unit according to a third embodiment.
FIG. 14 is a cross-sectional view of a stopper mechanism unit according to a fourth embodiment.
FIG. 15 is an enlarged cross-sectional view of the first annular member illustrated in FIG. 14.

### Description of Embodiments

Embodiments of the present invention will be described in detail with reference to the drawings. The present invention is not intended to be limited by the following embodiments. Constituent elements in the following embodiments include elements easily assumed by a person skilled in the art, or equivalents. Moreover, constituent elements in the following embodiments may be appropriately combined with each other. Furthermore, portions having the same structure are denoted by the same reference numerals, and the description thereof will be omitted. In the coordinates, the X direction indicates the axial direction of the rotating member, the X1 side is one side in the axial direction, and the X2 side is the other side in the axial direction.

### (First Embodiment)

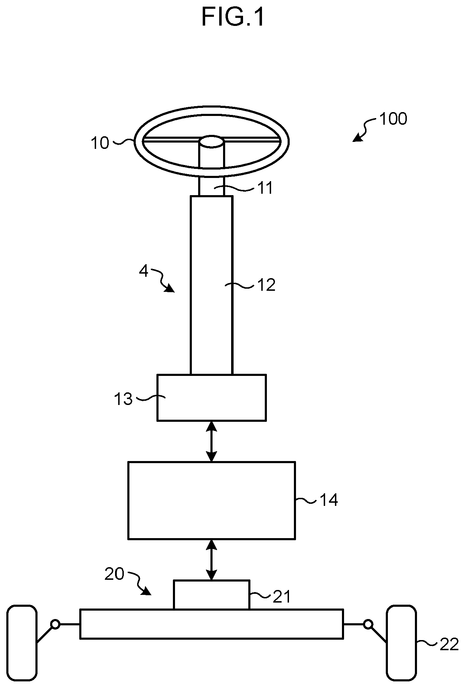

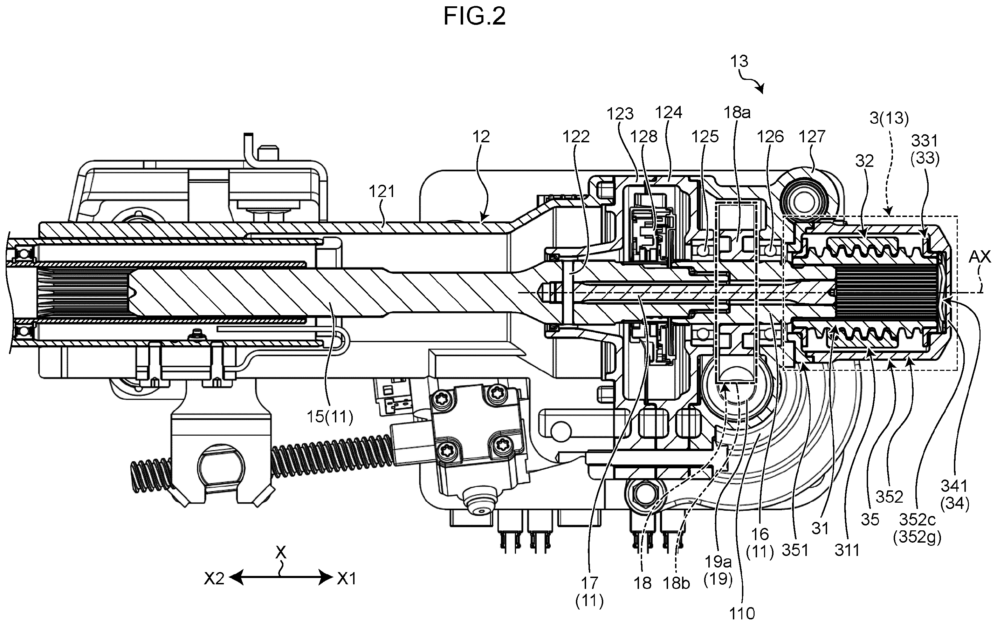

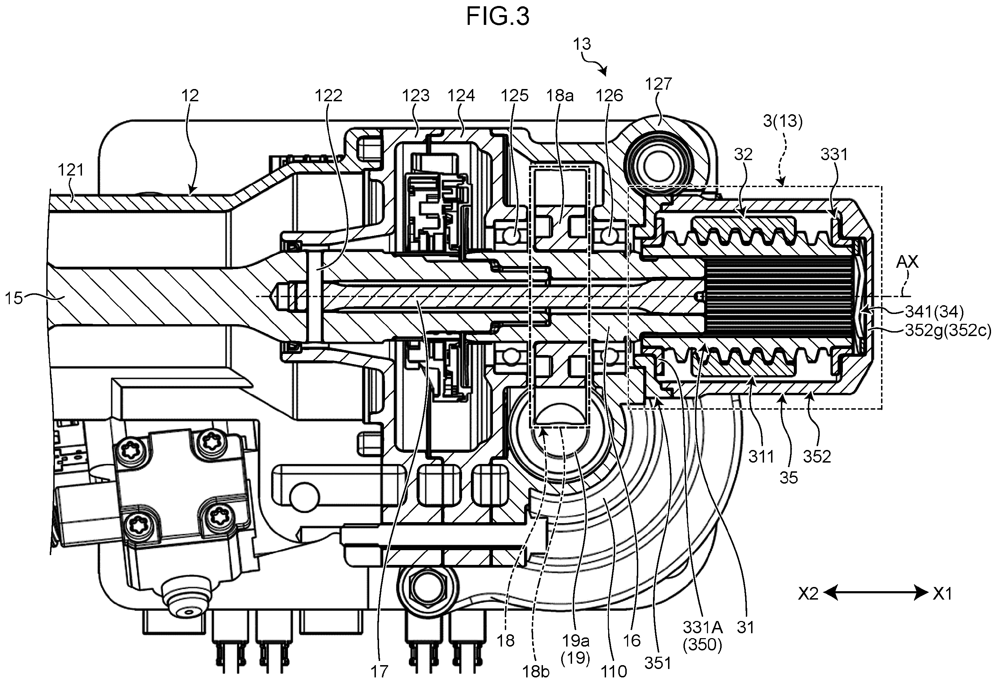

Hereinafter, a first embodiment will be described. FIG. 1 is a schematic diagram illustrating an overall configuration of a vehicle steering device according to the first embodiment. FIG. 2 is a cross-sectional view illustrating a part of FIG. 1. FIG. 3 is a cross-sectional view illustrating a part of FIG. 2.

As illustrated in FIG. 1, a vehicle steering device 100 includes a steering unit 4, a control device (ECU) 14, and a turning unit 20.

As illustrated in FIGS. 1 to 3, the steering unit 4 is provided with a steering reaction force device 13. At the time of steering a steering wheel 10, the steering reaction force device 13 applies, to the steering wheel 10, a steering reaction force in a direction opposite to the steering direction of the steering wheel 10. The control device (ECU) 14 calculates reaction torque according to the traveling state of the vehicle based on the operation information, adjusts the power value to be supplied to a motor 110 of the steering reaction force device 13 based on the reaction torque, and the motor 110 operates in accordance with the power value, allowing the steering reaction force of the steering wheel 10 to be transmitted to the operator. In addition, the control device (ECU) 14 calculates a current command value based on the operation information and controls a current to be supplied to a turning motor 21 of the turning unit 20. In the turning unit 20, a turning wheel 22 turns via various gears connected to the turning motor 21. Hereinafter, each configuration of the vehicle steering device 100 will be described in detail. In the steer-by-wire vehicle steering device 100, the steering wheel 10 and the turning wheel 22 are mechanically disconnected. However, in the present invention, the term "disconnected" includes, for example, a mode in which the steering wheel 10 and the turning wheel 22 can be connected by a clutch device or the like in an emergency, etc.

As illustrated in FIG. 1, the steering unit 4 includes a steering wheel 10, a steering shaft 11, a steering housing 12, and a steering reaction force device 13.

As illustrated in FIGS. 2 and 3, the steering shaft 11 extends in the X direction (axial direction). The steering wheel 10 is rotatably connected to the steering shaft 11. The steering shaft 11 is housed inside the steering housing 12. The steering shaft 11 includes a column shaft 15, an output shaft 16, and a torsion bar 17.

The column shaft 15 and the output shaft 16 are connected to each other via the torsion bar 17. Specifically, an insertion hole is provided in the axial direction at an X1 side end of the column shaft 15, and the torsion bar 17 is inserted into the insertion hole. The column shaft 15 and the torsion bar 17 are relatively non-rotatably connected to each other via a pin 122. The output shaft 16 is provided with a through hole penetrating in the axial direction, and an X1 side end of the torsion bar 17 is fitted into the through hole. With this configuration, the output shaft 16 and the torsion bar 17 are relatively non-rotatably connected to each other. As described above, when the steering wheel 10 is rotated, the steering shaft 11 is connected and rotated.

In addition, the steering housing 12 includes a shaft holding member 121, rotation support members 123 and 124, and a sub-housing 127.

The rotation support member 123 is located on the X1 side of the shaft holding member 121, while the rotation support member 124 is located on the X1 side of the rotation support member 123. The sub-housing 127 is located on the X1 side of the rotation support member 124. A bearing 125 is provided inside the rotation support member 124 in the radial direction, while a bearing 126 is provided inside the sub-housing 127 in the radial direction. The output shaft 16 is rotatably supported via bearings 125 and 126. A torque sensor 128 is provided between the rotation support member 123 and the rotation support member 124. The torque sensor 128 detects rotational torque transmitted between the column shaft 15 and the output shaft 16.

Here, the steering reaction force device 13 includes a steering shaft 11, a worm wheel 18, a worm shaft 19, and a motor 110.

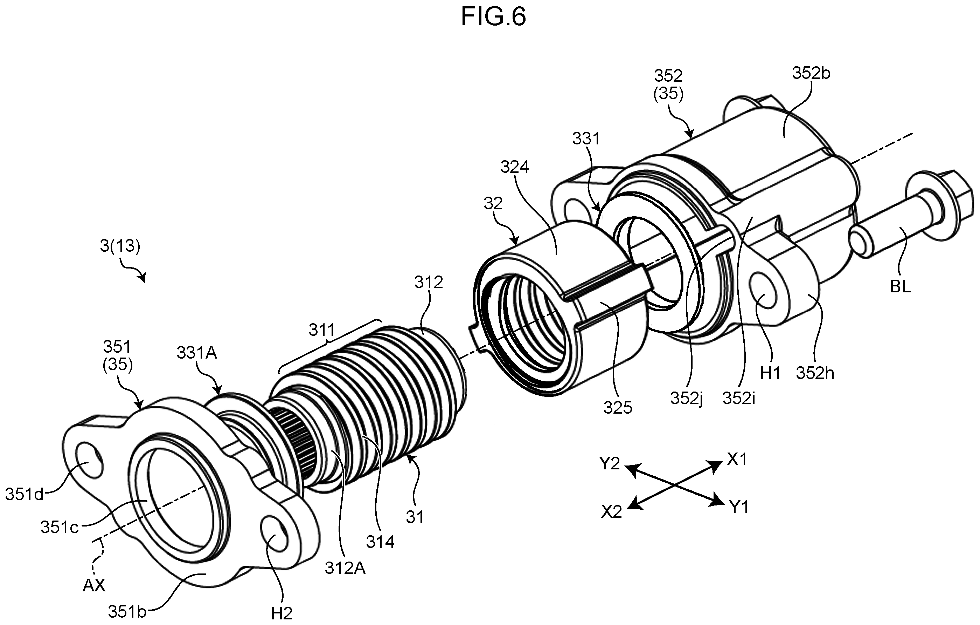

The worm wheel 18 is attached to the outer circumferential side of the output shaft 16 of the steering shaft 11. The worm wheel 18 includes a core metal portion 18a and a wheel tooth portion 18b. On the outer circumferential side of the core metal portion 18a, a wheel tooth portion 18b is provided. The worm shaft 19 and the motor 110 are located on the Y2 side (refer to FIG. 6) of the worm wheel 18. The worm shaft 19 is attached to the output shaft of the motor 110. The worm shaft 19 has a shaft tooth portion 19a. The shaft tooth portion 19a meshes with the wheel tooth portion 18b.

The motor 110 is a generation source of a steering reaction force. That is, the output of the motor 110 becomes reaction torque, and the reaction torque is transmitted from the steering shaft 11 to the steering wheel 10 via the worm wheel 18 and the worm shaft 19.

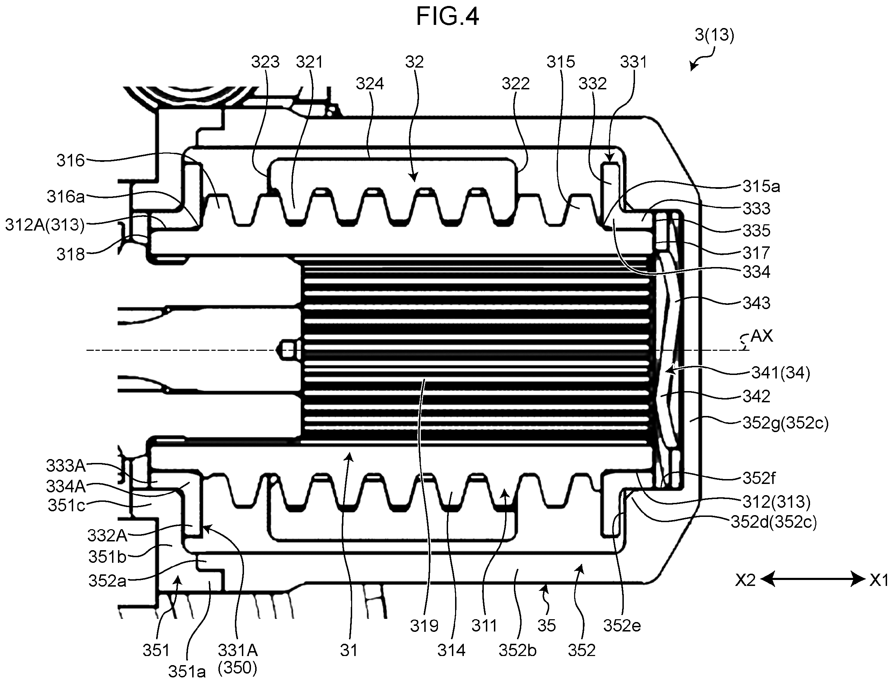

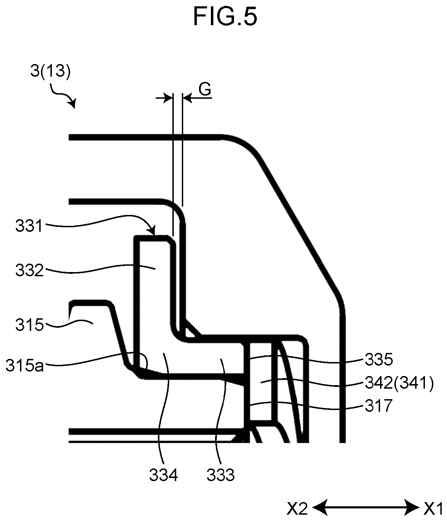

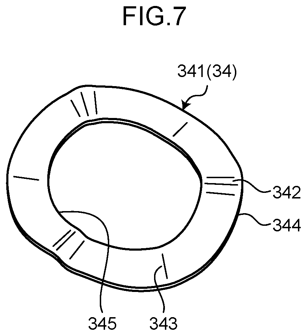

As illustrated in FIGS. 2 and 3, a stopper mechanism unit 3 is provided on the X1 side with respect to the output shaft 16 of the steering shaft 11. Hereinafter, the stopper mechanism unit 3 will be described in detail. FIG. 4 is an enlarged cross-sectional view of a part of FIG. 3. FIG. 5 is an enlarged cross-sectional view of a part of FIG. 4. FIG. 6 is an exploded perspective view of the stopper mechanism unit according to the first embodiment. FIG. 7 is a perspective view of a wave washer of FIG. 6.

As illustrated in FIGS. 2 and 3, the rotating member 31 has a central axis AX, and the axial direction of the central axis AX matches the X direction. The rotating member 31 included in the stopper mechanism unit 3 is fitted, using spline fitting, to an X1 side end of the output shaft 16 of the steering shaft 11. That is, an internal spline 319 extending in the X direction is provided on the inner circumferential side of the rotating member 31, while an external spline extending in the X direction is provided on the outer circumferential side at the X1 side end of the output shaft 16. The external spline of the output shaft 16 is fitted to the internal spline 319 of the rotating member 31. With this configuration, the rotating member 31 is movable in the X direction with respect to the output shaft 16 and is not rotatable in a circumferential direction around the axis of the central axis AX. That is, the rotating member 31 rotates integrally with the output shaft 16.

As illustrated in FIG. 4, the stopper mechanism unit 3 includes a rotating member 31, a nut 32, a first annular member 331, an elastic member 34, and a housing 35.

The rotating member 31 has a central axis AX. The axial direction of the central axis AX is the X direction. A direction around the central axis AX is the circumferential direction. A direction orthogonal to the central axis AX is the radial direction. The rotating member 31 includes an external thread portion 311, a first cylindrical surface portion 312, and a second cylindrical surface portion 312A.

The external thread portion 311 has an external thread 314 on the outer circumference thereof. In the external threads 314, an external thread 315 is located at an end on the most X1 side, while an external thread 316 is located at an end on the most X2 side. The first cylindrical surface portion 312 is adjacent to the external thread portion 311 on the X1 side thereof. The first cylindrical surface portion 312 has a cylindrical surface 313. The cylindrical surface 313 extends in the circumferential direction around the central axis AX. The diameter of the cylindrical surface 313 is smaller than the outer diameter of the external thread portion 311. That is, the thread top of the external thread 314 is located outside the cylindrical surface 313 in the radial direction. In other words, the position of a bottom 315a in the radial direction is substantially the same as the position of the cylindrical surface 313 in the radial direction, and the external thread 315 protrudes outward in the radial direction from the bottom 315a.

The second cylindrical surface portion 312A is adjacent to the external thread portion 311 on the X2 side thereof. The second cylindrical surface portion 312A has a cylindrical surface 313. The position of a bottom 316a in the radial direction is substantially the same as the position of the cylindrical surface 313 in the radial direction, and the external thread 316 protrudes outward in the radial direction from the bottom 316a. The rotating member 31 has an axial end surface 317 at an end on the X1 side, and the rotating member 31 has an axial end surface 318 at an end on the X2 side.

The nut 32 is provided on the outer circumferential side of the rotating member 31. The nut 32 has an internal thread 321 on the inner circumferential side. The internal thread 321 meshes with the external thread 314 of the rotating member 31. An outer circumferential surface 324 of the nut 32 is a cylindrical surface extending in the circumferential direction. An axial end surface 322 is provided at an end of the nut 32 on the X1 side, and an axial end surface 323 is provided at an end of the nut 32 on the X2 side.

The first annular member 331 has an annular shape extending in the circumferential direction. The first annular member 331 is inserted into the first cylindrical surface portion 312. The inner diameter of the first annular member 331 is larger than the outer diameter of the first cylindrical surface portion 312. This allows the first annular member 331 to move in the X direction in a state of being inserted into the first cylindrical surface portion 312. The first annular member 331 includes a vertical wall portion 332 and a tubular portion 333. The vertical wall portion 332 extends in the radial direction. The tubular portion 333 extends in the circumferential direction. The vertical wall portion 332 and the tubular portion 333 are connected via a corner portion 334. At an end on the X1 side of the tubular portion 333, there is provided an axial end surface 335.

A wave washer 341, which is an example of the elastic member 34, is disposed adjacent to the first annular member 331 on the X1 side thereof. The elastic member 34 is not limited to the wave washer 341 and can be implemented by applying various elastic members such as a disc spring. The wave washer 341 overlaps the axial end surface 335 when viewed in the X direction. The wave washer 341 abuts on the axial end surface 335 and is capable of abutting on the first annular member 331 to be elastically deformable in the X direction. The wave washer 341 and the axial end surface 317 of the rotating member 31 are separated from each other in the X direction. That is, the wave washer 341 and the axial end surface 317 of the rotating member 31 do not abut on each other.

As illustrated in FIGS. 4 and 7, the wave washer 341 has an inner circumferential edge 345 on the inner side in the radial direction and an outer circumferential edge 344 on the outer side in the radial direction. In addition, a bent portion 342 and a bent portion 343 are alternately arranged in the circumferential direction. The bent portion 342 protrudes toward the X2 side, while the bent portion 343 protrudes toward the X1 side. The bent portion 342 abuts on the axial end surface 335, while the bent portion 342 abuts on a disc portion 352g to be described below.

As illustrated in FIG. 4, the housing 35 is disposed on the outer circumferential side of the rotating member 31, the nut 32, the first annular member 331, and the wave washer 341. The housing 35 includes a first housing 351 and a second housing 352.

As illustrated in FIGS. 4 and 6, the first housing 351 is disposed on the X2 side of the housing 35. The first housing 351 includes a coupling portion 351a, a vertical wall portion 351b, a cylindrical portion 351c, and a flange 351d (refer to FIG. 6).

The coupling portion 351a is fitted to a coupled portion 352a of the second housing 352 and coupled to the coupled portion 352a. The vertical wall portion 351b extends in the radial direction, and the cylindrical portion 351c extends in the circumferential direction. As illustrated in FIG. 6, the first housing 351 has flanges 351d protruding toward the Y1 side and the Y2 side. The flange 351d is provided with a second bolt hole H2. There is provided an internal thread on the inner circumference of the second bolt hole H2, and the internal thread meshes with the external thread of a bolt BL.

As illustrated in FIGS. 4 and 6, the second housing 352 includes a cylindrical portion 352b, a projection 352d, a disc portion 352g, a flange 352h, and a protrusion 352i.

The cylindrical portion 352b extends in the circumferential direction. The disc portion 352g extends in the radial direction and seals the opening on the X1 side in the cylindrical portion 352b. The cylindrical portion 352b and the disc portion 352g are connected to each other via the projection 352d. The projection 352d protrudes toward the inside of the second housing 352. Specifically, the projection 352d protrudes inward in the radial direction and toward the X2 side. The projection 352d has a flat surface 352e and a cylindrical surface 352f. The flat surface 352e is an axial end surface on the X2 side of the projection 352d, and the cylindrical surface 352f is an inner circumferential surface of the projection 352d.

Here, as illustrated in FIG. 5, a gap G in the X direction is provided between the flat surface 352e and the vertical wall portion 332 of the first annular member 331. The size of the gap G is, for example, a distance that allows the wave washer 341 to deform in the axial direction. In addition, as illustrated in FIG. 4, the disc portion 352g and the projection 352d form a holding portion 352c. That is, the disc portion 352g on the X2 side and the projection 352d on the inner circumferential side form the holding portion 352c for holding the wave washer 341.

Furthermore, as illustrated in FIG. 6, the second housing 352 has flanges 352h protruding toward the Y1 side and the Y2 side. The flange 352h is provided with a first bolt hole H1. A through hole is provided in the inner circumference of the first bolt hole H1, and a shaft portion of the bolt BL passes through the through hole. The outer circumferential surface 324 of the nut 32 is provided with a projection 325 protruding outward in the radial direction. The projection 325 extends in the X direction. The second housing 352 has a protrusion 352i protruding outward in the radial direction. On the inner circumferential side of the protrusion 352i, there is provided a groove 352j. The projection 325 is fitted into the groove 352j. In this manner, the protrusion 352i and the projection 325 bring the nut 32 into a non-rotating state with respect to the housing 35.

As illustrated in FIG. 4, a second annular member 331A is inserted into the second cylindrical surface portion 312A. The second annular member 331A is an example of a nut abutment portion 350. The second annular member 331A includes a vertical wall portion 332A and a tubular portion 333A. The vertical wall portion 332A extends in the radial direction. The vertical wall portion 332A is disposed on the X2 side of the nut 32 to face the nut 32. The tubular portion 333A extends in the circumferential direction. The vertical wall portion 332A and the tubular portion 333A are connected to each other via a corner portion 334A. The second annular member 331A constantly abuts on the external thread 316 of the rotating member 31. Specifically, the bottom 316a of the external thread 316 and a corner portion 334A of the second annular member 331A abut on each other. In other words, the second annular member 331A is sandwiched between the first housing 351 and the external thread 316 in the X direction. The second annular member 331A is capable of abutting on the axial end surface 323 of the nut 32 when the nut 32 moves to the X2 side. Here, the second annular member 331A and the rotating member 31 are movable relative to each other in the axial direction (X direction). Therefore, when the nut 32 moves toward the X2 side and the axial end surface 323 compresses the vertical wall portion 332A of the second annular member 331A in the X direction, a reaction force that returns the vertical wall portion 332A to the original state is generated, and the reaction force is transmitted to the rotating member 31. This allows the second annular member 331A to push the rotating member 31 toward the X1 side.

Next, an assembly procedure of the stopper mechanism unit 3 will be briefly described with reference to FIG. 6. As illustrated in FIG. 6, the rotating member 31 is fastened to the inner circumferential side of the nut 32 as a first procedure, and then, the first annular member 331 is inserted into the first cylindrical surface portion 312 of the rotating member 31, and the second annular member 331A is inserted into the second cylindrical surface portion 312A. Next, in this state, the rotating member 31, the nut 32, the first annular member 331, and the second annular member 331A are inserted into the second housing 352. At that time, the projection 325 is fitted into a groove portion 352j. Then, the first housing 351 is bolted to the second housing 352. Specifically, the flange 351d is abutted against the flange 352h, allowing the second bolt hole H2 and the first bolt hole H1 to communicate with each other. By passing the bolt BL through the first bolt hole H1 so as to be meshed with the internal thread of the second bolt hole H2, the assembly of the stopper mechanism unit 3 is completed.

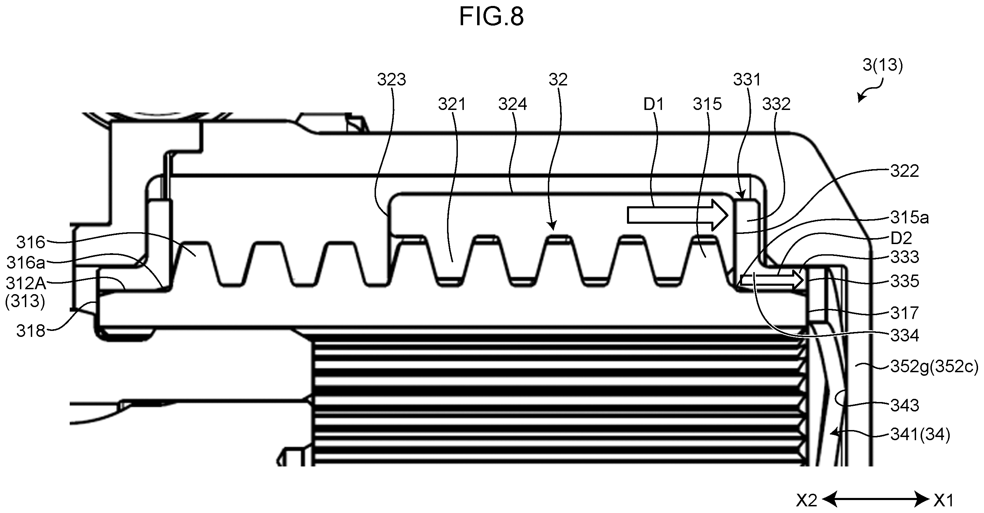

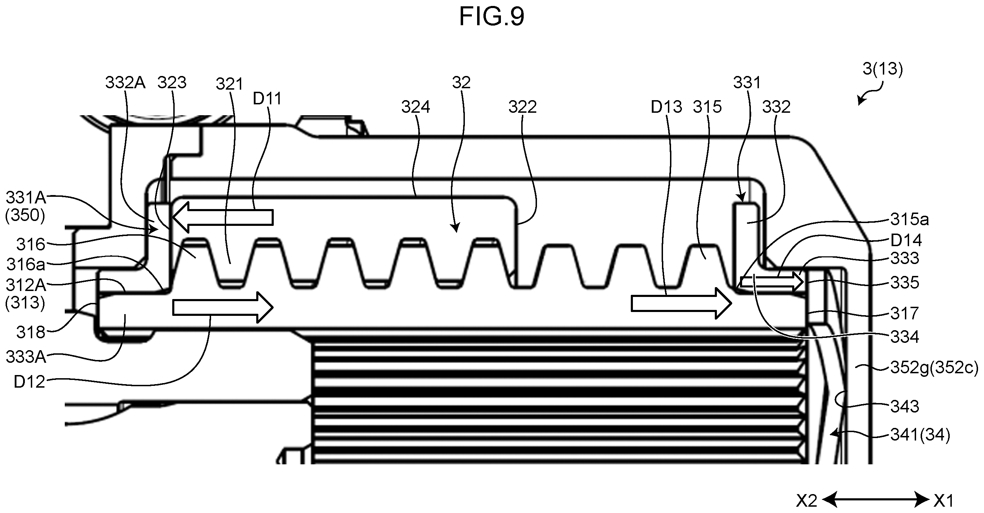

Next, the behavior of the stopper mechanism unit 3 will be briefly described. FIG. 8 is a cross-sectional view of the stopper mechanism unit in a state where the nut is located at an end on one side in the axial direction. FIG. 9 is a cross-sectional view of the stopper mechanism unit in a state where the nut is located at the end on the other side in the axial direction.

### (First Aspect)

The nut 32 is non-rotatably supported by the housing 35. Therefore, as illustrated in FIG. 8, when the rotating member 31 rotates, the nut 32 moves (makes a linear motion) to the X1 side with respect to the rotating member 31 as indicated by arrow D1. The axial end surface 322 of the nut 32 abuts on the vertical wall portion 332 of the first annular member 331. As described with reference to FIG. 5, the gap G in the X direction is provided between the flat surface 352e and the vertical wall portion 332 of the first annular member 331. Accordingly, the first annular member 331 moves to the X1 side as indicated by arrow D2, and the axial end surface 335 compresses the wave washer 341 in the X direction and elastically deforms the wave washer 341.

### (Second Aspect)

As illustrated in FIG. 9, when the rotating member 31 rotates in a direction opposite to the first aspect, the nut 32 moves (makes a linear motion) to the X2 side with respect to the rotating member 31 as indicated by arrow D11. Therefore, the axial end surface 323 of the nut 32 abuts on the vertical wall portion 332A of the second annular member 331A. The second annular member 331A is supported by the first housing 351 in the X direction, generating a reaction force directed from the second annular member 331A toward the X1 side. The reaction force is transmitted to the external thread 316, and the rotating member 31 moves toward the X1 side as indicated by arrow D12. Since the rotating member 31 is provided with the external thread 315, the external thread 315 is also directed to the X1 side as indicated by arrow D13. The bottom 315a of the external thread 315 hits a corner portion 334 of the first annular member 331. Here, as described with reference to FIG. 5, the gap G in the X direction is provided between the flat surface 352e and the vertical wall portion 332. Accordingly, the first annular member 331 moves to the X1 side as indicated by arrow D14. The axial end surface 335 compresses the wave washer 341 in the X direction, and elastically deforms the wave washer 341.

As described above, the vehicle steering device according to the first embodiment includes: the rotating member 31 including the external thread portion 311 and the first cylindrical surface portion 312; the nut 32 that moves in a non-rotating state in the X direction with respect to the rotating member 31; the first annular member 331 that is inserted into the first cylindrical surface portion 312 and is movable in the X direction; the wave washer 341 (elastic member 34) that abuts on the first annular member 331 and is elastically deformable in the X direction; and the housing 35. The housing 35 includes: the holding portion 352c that holds the elastic member 34; and the second annular member 331A (nut abutment portion 350) that is capable of abutting on the nut 32 when the nut 32 moves, and that transmits, to the rotating member 31, a reaction force directed toward the X1 side generated when abutting on the nut 32.

In this manner, the present embodiment sets only one wave washer 341 which is the elastic member 34. That is, the wave washer 341 is provided at the portion on the X1 side with respect to the nut 32 while the wave washer 341 is not provided at the portion on the X2 side with respect to the nut 32, making the number of the elastic members 34 smaller than the number in Patent Literature 1. This further shortens the distance of the stopper mechanism unit 3 in the axial direction, making it eventually possible to achieve downsizing of the vehicle steering device 100. Hereinafter, brief description will be given on how the stopper mechanism unit 3 functions effectively even when one wave washer 341 is used.

First, as a first aspect, when the nut 32 makes a linear motion toward the X1 side, as illustrated in FIG. 8, the axial end surface 322 of the nut 32 compresses the wave washer 341 in the X direction via the first annular member 331, and elastically deforms the wave washer 341.

Next, as a second aspect, when the nut 32 makes a linear motion toward the X2 side, the axial end surface 323 of the nut 32 abuts on the second annular member 331A (nut abutment portion 350) as illustrated in FIG. 9. The second annular member 331A is supported by the first housing 351 in the X direction, generating a reaction force directed from the second annular member 331A toward the X1 side. The reaction force is transmitted to the external thread 316, allowing the rotating member 31 to move toward the X1 side. Thereafter, the axial end surface 335 of the first annular member 331 compresses the wave washer 341 in the X direction to elastically deform the wave washer 341, thereby absorbing the impact.

In this manner, in both the first aspect in which the nut 32 makes a linear motion to the X1 side and the second aspect in which the nut 32 makes a linear motion to the X2 side, one wave washer 341 is elastically deformed. As described above, in the present embodiment, since the number of wave washers 341 is smaller than that in Patent Literature 1, the distance of the stopper mechanism unit 3 in the axial direction is further shortened, making it eventually possible to achieve downsizing of the vehicle steering device 100.

The rotating member 31 has the second cylindrical surface portion 312A. The nut abutment portion 350 is the second annular member 331A inserted into the second cylindrical surface portion 312A.

As described above, in the second aspect, when the nut 32 makes a linear motion toward the X2 side, as illustrated in FIG. 9, the nut 32 abuts on the second annular member 331A, generating a reaction force directed from the second annular member 331A toward the X1 side. The reaction force is transmitted to the external thread 316, allowing the rotating member 31 to move toward the X1 side. In this manner, the second annular member 331A appropriately functions as the nut abutment portion 350. Incidentally, when the second annular member 331A is damaged, the function as the nut abutment portion 350 can be easily recovered by replacing the second annular member with a new member. Furthermore, the replaceable component is not limited to the second annular member 331A, and for example, the wave washer 341 and the like are also replaceable.

### (First Modification)

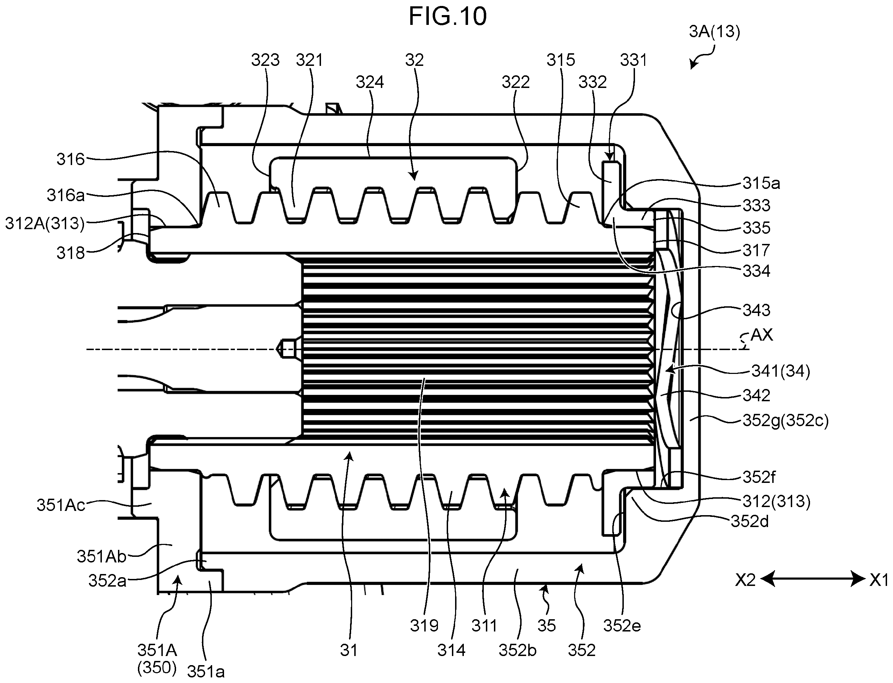

Hereinafter, a first modification will be described. FIG. 10 is a cross-sectional view of a stopper mechanism unit according to the first modification.

Although the first embodiment applies the second annular member 331A as the nut abutment portion 350, the first modification applies a first housing 351A as the nut abutment portion 350. A brief description will be given below.

The stopper mechanism unit 3A according to the first modification does not include the second annular member 331A of the first embodiment. That is, the first housing 351A is applied as the nut abutment portion 350. The first housing 351A as the nut abutment portion 350 is disposed on the X2 side of the housing 35. The first housing 351A includes a coupling portion 351a, a vertical wall portion 351Ab, and a cylindrical portion 351Ac.

The coupling portion 351a is fitted to a coupled portion 352a of the second housing 352 and coupled to the coupled portion 352a. The vertical wall portion 351Ab extends in the radial direction, and the cylindrical portion 351Ac extends in the circumferential direction. The cylindrical portion 351Ac abuts on the external thread 316. The coupling portion 351a, the vertical wall portion 351Ab, and the cylindrical portion 351Ac are integrally molded.

The behavior of the first modification will be described below. The first aspect is the same as the behavior described in the first embodiment. The second behavior will be described. First, the axial end surface 323 of the nut 32 abuts on the vertical wall portion 351Ab of the first housing 351A. This generates a reaction force directed from the vertical wall portion 351Ab toward the X1 side. The reaction force is transmitted to the external thread 316, allowing the rotating member 31 to move toward the X1 side. Since the external thread 315 also moves toward the X1 side, the first annular member 331 moves toward the X1 side. The axial end surface 335 compresses the wave washer 341 in the X direction, and elastically deforms the wave washer 341.

As described above, the vehicle steering device according to the first modification includes the first housing 351A as an example of the nut abutment portion 350. The first housing 351A is capable of abutting on the nut 32 when the nut 32 moves, and transmits, to the rotating member 31, the reaction force directed toward the X1 side generated when the nut 32 abuts.

As described above, when the nut 32 makes a linear motion toward the X2 side, the nut 32 abuts on the first housing 351A, generating the reaction force directed from the first housing 351A toward the X1 side. In this manner, even when the first housing 351A is applied as the nut abutment portion 350, the stopper mechanism unit 3A functions properly.

### (Second Modification)

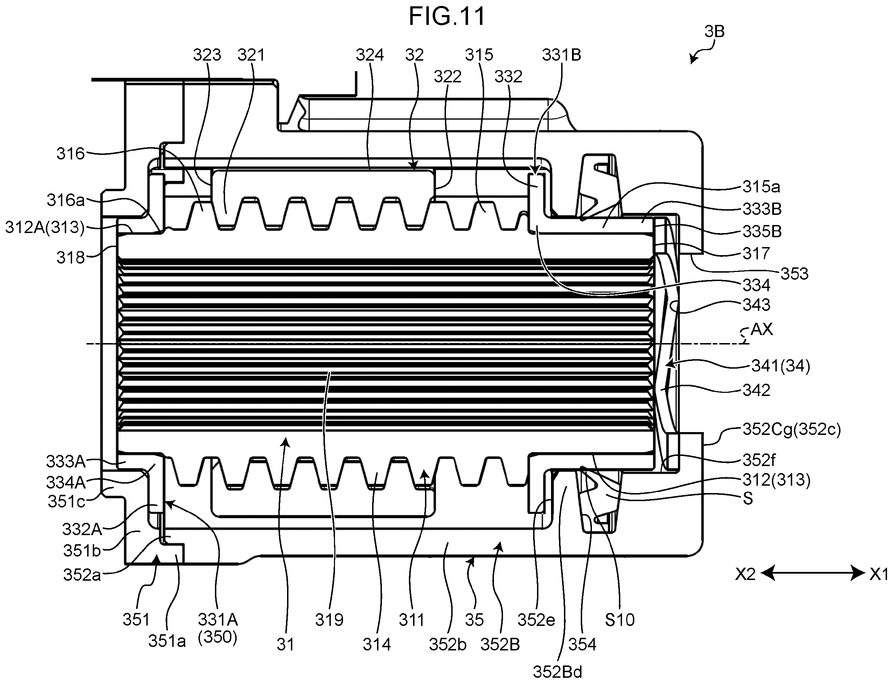

Hereinafter, a second modification will be described. FIG. 11 is a cross-sectional view of a stopper mechanism unit according to the second modification.

In a stopper mechanism unit 3B according to the second modification, a seal member S is provided. A brief description will be given below. As illustrated in FIG. 11, a second housing 352B has a projection 352Bd at X1 side end. On the inner circumferential side of the projection 352Bd, a recess 354 is provided. The recess 354 extends annularly in the circumferential direction. In the cross section illustrated in FIG. 11, the recess 354 has a substantially trapezoidal shape in which the distance in the X direction decreases toward the outside in the radial direction. The recess 354 internally contains a seal member S which has an annular shape. There is provided a through hole 353 in a disc portion 352Cg of the second housing 352B. The through hole 353 has a circular shape extending in the circumferential direction around the central axis AX.

A first annular member 331B includes a vertical wall portion 332 and a tubular portion 333B. The first annular member 331B has a difference from the first annular member 331 in the tubular portion 333B. Specifically, the distance in the X direction of the tubular portion 333B of the first annular member 331B is larger than the distance in the X direction of the tubular portion 333 of the first annular member 331. The tubular portion 333B seals the inner circumferential side opening of the recess 354. The distal end S10 on the inner circumferential side of the seal member S abuts on the tubular portion 333B.

As described above, in the vehicle steering device according to the second modification, the second housing 352B has the projection 352Bd provided with the recess 354, and the annular seal member S is accommodated in the recess 354. The distal end S10 on the inner circumferential side of the seal member S abuts on the tubular portion 333B. There is provided a through hole 353 in a disc portion 352Cg of the second housing 352B.

Foreign matter such as dust can enter from the through hole 353 toward the inside of the second housing 352B. However, the distal end S10 of the seal member S abuts on the first annular member 331B, entry of the foreign matter can be inhibited. In addition, the seal member S can inhibit leakage of the oil inside the second housing 352B to the outside.

### (Second Embodiment)

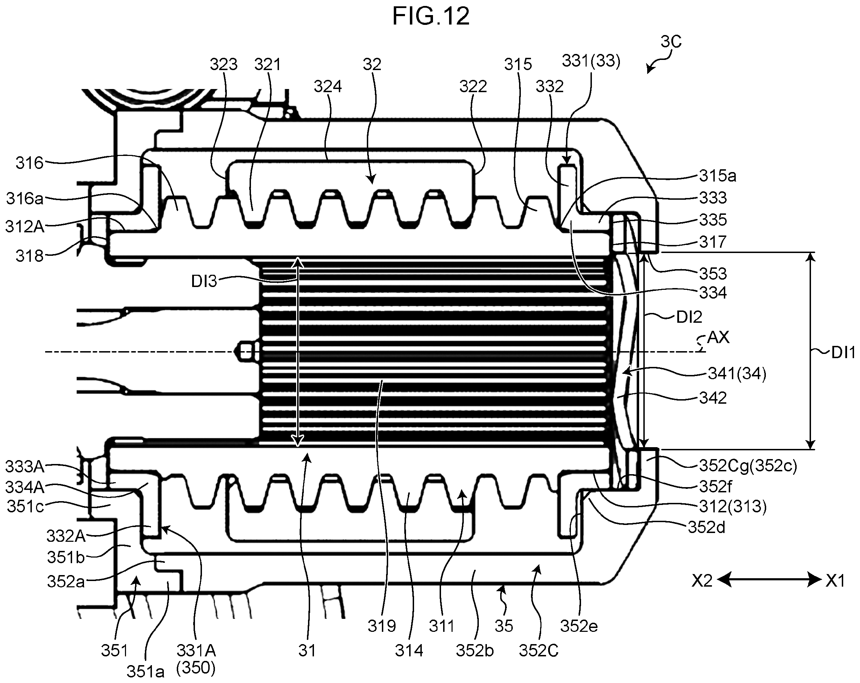

Hereinafter, a second embodiment will be described. FIG. 12 is a cross-sectional view of a stopper mechanism unit according to the second embodiment.

In a stopper mechanism unit 3C according to the second embodiment, the through hole 353 is provided in the disc portion 352Cg of a second housing 352C. The through hole 353 has a circular shape extending in the circumferential direction around the central axis AX. The through hole 353 has an inner diameter DI1.

On the X2 side of the disc portion 352Cg, a wave washer 341 having an annular shape is disposed. The wave washer 341 has an inner diameter DI2. Furthermore, the internal spline 319 is provided on the inner circumference of the rotating member 31 as described above. The rotating member 31 has an inner diameter DI3. The inner diameter DI2 of the wave washer 341 is equal to or larger than the inner diameter DI3 of the rotating member 31, and the inner diameter DI1 of the through hole 353 is equal to or larger than the inner diameter DI2 of the wave washer 341.

As described above, in the vehicle steering device according to the second embodiment, the annular through hole 353 is provided in the holding portion 352c of the second housing 352C. The inner diameter DI2 is equal to or larger than the inner diameter DI3, and the inner diameter DI1 is equal to or larger than the inner diameter DI2.

Therefore, a component such as a shaft extending in the axial direction can be fitted to the internal spline 319 on the inner circumferential side of the rotating member 31 by penetrating the through hole 353 and the inner circumferential side of the wave washer 341.

### (Third Embodiment)

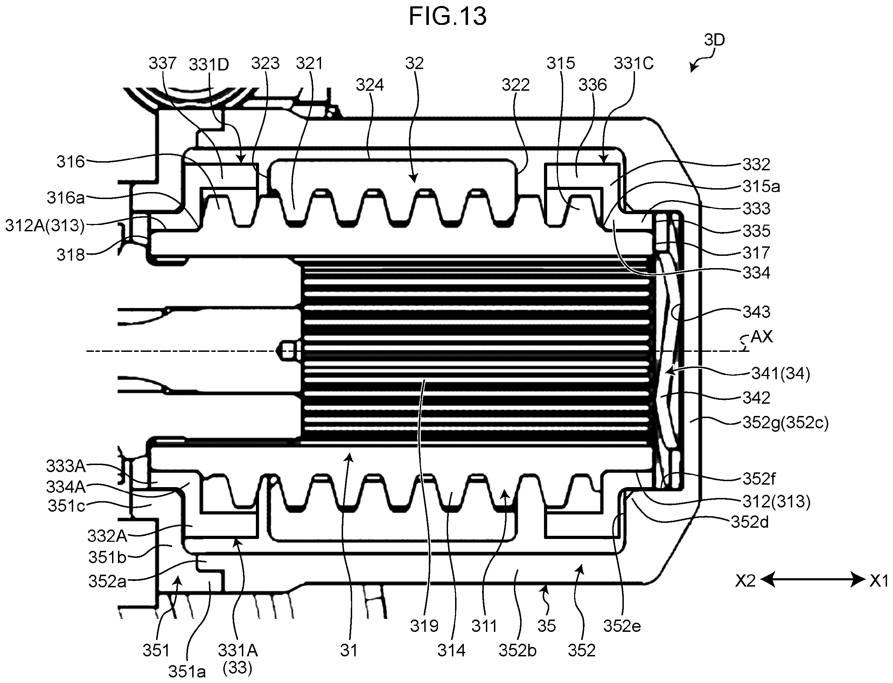

Hereinafter, a third embodiment will be described. FIG. 13 is a cross-sectional view of a stopper mechanism unit according to the third embodiment.

In a stopper mechanism unit 3D according to the third embodiment, a first annular member 331C and a second annular member 331D are provided as differences from the stopper mechanism unit 3 according to the first embodiment.

The first annular member 331 according to the first embodiment includes the vertical wall portion 332 and the tubular portion 333. In contrast, the first annular member 331C according to the third embodiment further includes a protrusion 336. That is, the first annular member 331C includes the vertical wall portion 332, the tubular portion 333, and the protrusion 336. The protrusion 336 extends in the circumferential direction. The protrusion 336 extends toward the X2 side from the outer end of the vertical wall portion 332 in the radial direction.

The second annular member 331D includes a vertical wall portion 332A, a tubular portion 333A, and a protrusion 337. The protrusion 337 extends in the circumferential direction. The protrusion 337 extends toward the X1 side from the outer end of the vertical wall portion 332A in the radial direction.

In this manner, the first annular member 331C has the protrusion 336 that protrudes toward the nut in the X direction (axial direction) and is capable of abutting on the nut 32. The second annular member 331D has the protrusion 337 that protrudes toward the nut in the X direction (axial direction) and is capable of abutting on the nut 32.

As described above, in the vehicle steering device according to the third embodiment, each of the first annular member 331C and the second annular member 331D has the protrusion 336 or the protrusion 337 that protrudes toward the nut in the X direction and is capable of abutting on the nut 32.

Therefore, in the third embodiment, a movable distance of the nut 32 in the X direction is small as compared with the first annular member 331 and the second annular member 331A having no protrusion 336 or the protrusion 337 according to the first embodiment. With this configuration, the limit range of the turning angle of the turning wheel can be reduced, and the rotatable angle of the steering wheel 10 can be set to be smaller.

### (Fourth Embodiment)

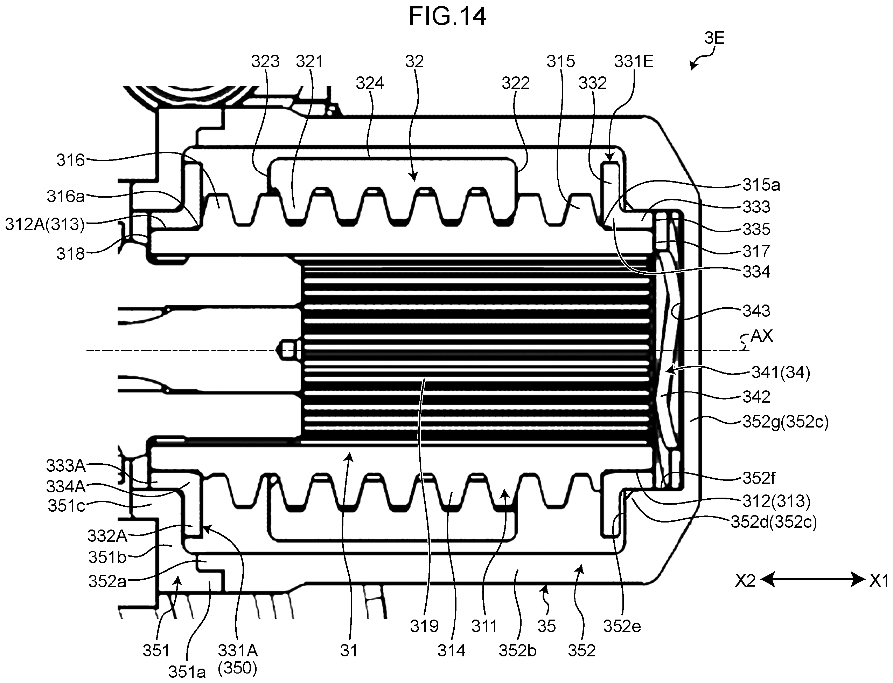

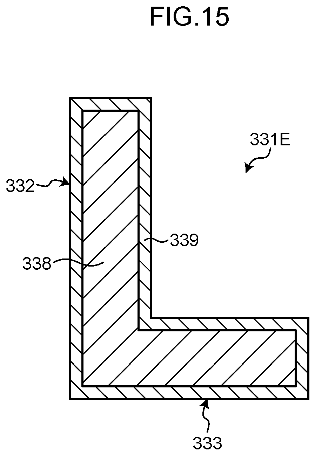

Hereinafter, a fourth embodiment will be described. FIG. 14 is a cross-sectional view of a stopper mechanism unit according to the fourth embodiment. FIG. 15 is an enlarged cross-sectional view of the first annular member illustrated in FIG. 14.

In a stopper mechanism unit 3E according to the fourth embodiment, a first annular member 331E is provided as a difference from the stopper mechanism unit 3 according to the first embodiment.

As illustrated in FIGS. 14 and 15, the first annular member 331E includes a vertical wall portion 332 and a tubular portion 333. Each of the vertical wall portion 332 and the tubular portion 333 includes a main body 338 and a covering layer 339.

The covering layer 339 is provided on the surface layer portion of the main body 338. The main body 338 is formed of metal, for example, and the covering layer 339 is formed of resin, for example. The elastic modulus of the main body 338 is 205 GPa, for example. The elastic modulus of the covering layer 339 is 650 MPa, for example. In this manner, the elastic modulus of the covering layer 339 is smaller than the elastic modulus of the main body 338.

As described above, in the vehicle steering device according to the fourth embodiment, the first annular member 331E includes: the main body 338; and the covering layer 339 provided on the surface layer portion of the main body 338. The elastic modulus of the covering layer 339 is smaller than the elastic modulus of the main body 338.

This makes it possible to reduce a contact sound (interference sound) when the nut 32 abuts on the first annular member 331E. In addition, the covering layer 339 reduces friction between the tubular portion 333 of the first annular member 331E and the second cylindrical surface portion 312A of the rotating member 31. This inhibits the catching of the first annular member 331E on the second cylindrical surface portion 312A when the nut 32 abuts on the first annular member 331E. Furthermore, by applying grease to the covering layer 339, it is possible to further reduce the contact sound (interference sound) and further inhibit the catching of the first annular member 331E described above.

### Reference Signs List

- 3: STOPPER MECHANISM PORTION
- 3A: STOPPER MECHANISM UNIT
- 3B: STOPPER MECHANISM UNIT
- 3C: STOPPER MECHANISM UNIT
- 3D: STOPPER MECHANISM UNIT
- 3E: STOPPER MECHANISM UNIT
- 4: STEERING UNIT
- 10: STEERING WHEEL
- 11: STEERING SHAFT
- 12: STEERING HOUSING
- 13: STEERING REACTION FORCE DEVICE
- 14: CONTROL DEVICE (ECU)
- 15: COLUMN SHAFT
- 16: OUTPUT SHAFT
- 17: TORSION BAR
- 18: WORM WHEEL
- 18a: CORE METAL PORTION
- 18b: WHEEL TOOTH PORTION
- 19: WORM SHAFT
- 19a: SHAFT TOOTH PORTION
- 20: TURNING UNIT
- 21: TURNING MOTOR
- 22: TURNING WHEEL
- 31: ROTATING MEMBER
- 32: NUT
- 34: ELASTIC MEMBER
- 35: HOUSING
- 100: VEHICLE STEERING DEVICE
- 110: MOTOR
- 121: SHAFT HOLDING MEMBER
- 122: PIN
- 123: ROTATION SUPPORT MEMBER
- 124: ROTATION SUPPORT MEMBER
- 125: BEARING
- 126: BEARING
- 127: SUB-HOUSING
- 128: TORQUE SENSOR
- 311: EXTERNAL THREAD PORTION
- 312: FIRST CYLINDRICAL SURFACE PORTION
- 312A: SECOND CYLINDRICAL SURFACE PORTION
- 313: CYLINDRICAL SURFACE
- 314: EXTERNAL THREAD
- 315: EXTERNAL THREAD
- 315a: BOTTOM
- 316: EXTERNAL THREAD
- 316a: BOTTOM
- 317: AXIAL END SURFACE
- 318: AXIAL END SURFACE
- 319: INTERNAL SPLINE
- 321: INTERNAL THREAD
- 322: AXIAL END SURFACE
- 323: AXIAL END SURFACE
- 324: OUTER CIRCUMFERENTIAL SURFACE
- 325: PROJECTION
- 331: FIRST ANNULAR MEMBER
- 331A: SECOND ANNULAR MEMBER (NUT ABUTMENT PORTION)
- 331B: FIRST ANNULAR MEMBER
- 331C: FIRST ANNULAR MEMBER
- 331D: SECOND ANNULAR MEMBER
- 331E: FIRST ANNULAR MEMBER
- 332: VERTICAL WALL PORTION
- 332A: VERTICAL WALL PORTION
- 333: TUBULAR PORTION
- 333A: TUBULAR PORTION
- 334: CORNER PORTION
- 334A: CORNER PORTION
- 335: AXIAL DIRECTION END SURFACE
- 336: PROTRUSION
- 337: PROTRUSION
- 338: MAIN BODY
- 339: COVERING LAYER
- 341: WAVE WASHER
- 342: BENT PORTION
- 343: BENT PORTION
- 344: OUTER CIRCUMFERENTIAL EDGE
- 345: INNER CIRCUMFERENTIAL EDGE
- 350: NUT ABUTMENT PORTION
- 351: FIRST HOUSING
- 351a: COUPLING PORTION
- 351b: VERTICAL WALL PORTION
- 351A: FIRST HOUSING (NUT ABUTMENT PORTION)
- 351Ab: VERTICAL WALL PORTION
- 351c: CYLINDRICAL PORTION
- 351d: FLANGE
- 352: SECOND HOUSING
- 352a: COUPLED PORTION
- 352b: CYLINDRICAL PORTION
- 352c: HOLDING PORTION
- 352d: PROJECTION
- 352e: FLAT SURFACE
- 352f: CYLINDRICAL SURFACE
- 352g: DISC PORTION
- 352h: FLANGE
- 352i: PROTRUSION
- 352j: GROOVE PORTION
- 352B: SECOND HOUSING
- 352Bd: PROJECTION
- 352C: SECOND HOUSING
- 352Cg: DISC PORTION
- 353: THROUGH HOLE
- 354: RECESS
- BL: BOLT
- G: GAP
- H1: FIRST BOLT HOLE
- H2: SECOND BOLT HOLE
- S: SEAL MEMBER
- S10: DISTAL END

## Claims

1. A vehicle steering device in which a turning wheel and a steering wheel are mechanically disconnected, the vehicle steering device comprising
a stopper mechanism unit that regulates a range of a rotation angle of the steering wheel when the steering wheel is rotated,
wherein the stopper mechanism unit comprises:
a rotating member that comprises an external thread portion and a first cylindrical surface portion, the external thread portion being provided with an external thread on an outer circumference, the first cylindrical surface portion being adjacent to the external thread portion on one side of the external thread portion in an axial direction of a central axis, extending in a circumferential direction around the central axis, and having a cylindrical surface with a diameter smaller than an outer diameter of the external thread portion, the rotating member being configured to rotate in the circumferential direction as the steering wheel rotates;
a nut that is disposed on an outer circumferential side of the rotating member, has an inner circumference provided with an internal thread configured to mesh with the external thread, and is configured to move in a non-rotating state in an axial direction with respect to the rotating member by rotation of the rotating member;
a first annular member that is configured to be inserted into the first cylindrical surface portion of the rotating member and is configured to abut on the nut or the external thread portion so as to be movable in the axial direction;
an elastic member that is disposed adjacent to the first annular member on one side of the first annular member in the axial direction and is configured to abut on the first annular member so as to be elastically deformable in the axial direction; and
a housing that is disposed on an outer circumferential side of the rotating member, the nut, the first annular member, and the elastic member,
the housing comprises:
a holding portion that holds the elastic member; and
a nut abutment portion that is disposed on the other side of the nut in the axial direction to face the nut, is capable of abutting on the nut when the nut moves, and is configured to transmit, to the rotating member, a reaction force directed toward one side in the axial direction generated at a time of abutment of the nut.

2. The vehicle steering device according to claim 1,
wherein the rotating member comprises
a second cylindrical surface portion that is adjacent to the external thread portion on the other side of the external thread portion in the axial direction, extends in the circumferential direction, and has a cylindrical surface having a diameter smaller than an outer diameter of the external thread portion, and
the nut abutment portion is a second annular member configured to be inserted into the second cylindrical surface portion.

3. The vehicle steering device according to claim 1 or 2,
wherein the elastic member has an annular shape extending in the circumferential direction,
the rotating member has a tubular shape extending in a circumferential direction,
the holding portion of the housing is provided with a through hole with an annular shape penetrating in the axial direction and extending in the circumferential direction,
an inner diameter of the elastic member is equal to or larger than an inner diameter of the rotating member, and
an inner diameter of the through hole of the holding portion is equal to or larger than the inner diameter of the elastic member.

4. The vehicle steering device according to claim 2,
wherein the first annular member and the first cylindrical surface portion are movable relative to each other in the axial direction, and
the second annular member and the second cylindrical surface portion are movable relative to each other in the axial direction.

5. The vehicle steering device according to claim 2,
wherein the external thread of the rotating member and the second annular member are capable of abutting on each other.

6. The vehicle steering device according to claim 1,
wherein the holding portion of the housing has a flat surface extending in a radial direction, and
a gap in an axial direction is provided between the flat surface and the first annular member.

7. The vehicle steering device according to claim 1 or 2,
wherein the elastic member has an annular shape extending in the circumferential direction,
a disc portion extending in the radial direction is provided at an end portion on one side in the axial direction of the holding portion of the housing, and
the elastic member abuts on the disc portion to allow the holding portion to hold the elastic member.

8. The vehicle steering device according to claim 2,
wherein at least one of the first annular member or the second annular member has a protrusion that protrudes toward the nut in the axial direction and is capable of abutting on the nut.

9. The vehicle steering device according to claim 1 or 2,
wherein the first annular member comprises a main body and a covering layer provided on a surface layer portion of the main body, and an elastic modulus of the covering layer is smaller than an elastic modulus of the main body.
